(19) Europäisches Patentamt
European Patent Office
Office européen des brevets

(11) EP 1 729 880 B1

(12) **EUROPEAN PATENT SPECIFICATION**

(45) Date of publication and mention of the grant of the patent:
**03.10.2007 Bulletin 2007/40**

(21) Application number: **05718043.2**

(22) Date of filing: **17.03.2005**

(51) Int Cl.:
***B01J 20/26*** *(2006.01)*

(86) International application number:
**PCT/GB2005/000991**

(87) International publication number:
**WO 2005/089933 (29.09.2005 Gazette 2005/39)**

(54) **IMPROVEMENTS IN POLYMER PARTICLES**

VERBESSERUNGEN BEI POLYMERTEILCHEN

AMELIORATIONS APPORTEES A DES PARTICULES DE POLYMERES

(84) Designated Contracting States:
**AT BE BG CH CY CZ DE DK EE ES FI FR GB GR HU IE IS IT LI LT LU MC NL PL PT RO SE SI SK TR**

(30) Priority: **17.03.2004 GB 0406015**
**29.07.2004 US 592034 P**

(43) Date of publication of application:
**13.12.2006 Bulletin 2006/50**

(73) Proprietor: **Invitrogen Dynal AS**
**0309 Oslo (NO)**

(72) Inventor: **SONGE, Pal**
**N-0309 Oslo (NO)**

(74) Representative: **Couchman, Jonathan Hugh et al**
**Harrison Goddard Foote**
**Belgrave Hall**
**Belgrave Street**
**Leeds LS2 8DD (GB)**

(56) References cited:
**US-B1- 6 441 146**

- **UEDA E K M ET AL: "Current and prospective applications of metal ion-protein binding" JOURNAL OF CHROMATOGRAPHY A, ELSEVIER, AMSTERDAM, NL, vol. 988, no. 1, 21 February 2003 (2003-02-21), pages 1-23, XP004405859 ISSN: 0021-9673**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to polymer particles covalently bound to tagged proteins. In particular, the invention relates to magnetic polymer particles bound via the residue of a carboxymethylated aspartate (Cm-Asp) group to the HAT tag of a HAT tagged protein as well as to a process for forming the covalent linkage.

Magnetic polymer particles are of general utility in various medical and biochemical fields, for example as transport vehicles for the delivery of pharmaceutical products, for diagnostic purposes, for separation and for synthetic purposes. Such particles rely upon their magnetic properties in order to perform these functions: in diagnostic assay applications, for example, application of a magnetic field to a sample containing an analyte bound to magnetic polymer particles allows the isolation of the analyte without the use of centrifugation or filtration; and in therapeutic applications, for example, application of a magnetic field to the patient may serve to target drug-carrying magnetic polymer particles to a desired body site.

By magnetic is meant herein that the polymer particles contain superparamagnetic crystals. Thus the magnetic polymer particles are magnetically displaceable but are not permanently magnetizable. Many processes for preparing magnetic polymer particles are known, a large number of which involve preparing maghemite- or magnetite-containing polymer particles from pre-formed magnetic iron oxides, e.g. magnetite. Some of processes involved are described in US-A-4,654,267 (Ugelstad) the contents of which are incorporated herein by reference.

The use of immobilised metal ion affinity chromatography (IMAC) has been known for many years. The IMAC purification process is based upon the employment of a chelating matrix loaded with transition metal ions such as $Cu^{2+}$ or $Ni^{2+}$ which is capable of binding electron donating groups present on the surface of proteins, in particular the imidazole side chain of histidine. The electron donating group is believed to coordinate to vacant coordination sites around the metal ion. The interaction between the metal ion and the electron donating groups present on the protein surfaces can be altered by, for example, varying pH and hence purification can be achieved via reversible metal complex/protein interaction. Most commonly, if a protein is bound to a solid phase via the interaction between the metal ion and the imidazolyl side chain of histidine, the protein can be removed by addition of imidazole itself, i.e. by competitive elution.

Several different chelating ligands have been employed in IMAC to purify proteins. Nitrilo triacetate (NTA) (a tetradentate ligand) and the pentadentate ligand tris(carboxymethyl)ethylenediamine are examples of such ligands but these suffer from various disadvantages such as unspecific protein interaction, metal leakage etc.

US 6242581 proposes a solution to the metal leakage problem by the use of a carboxymethylated aspartate (Cm-Asp) group in IMAC where the bound transition metal ion has octahedral geometry. The ligand is said to be ideal for isolating histidine tagged recombinant proteins. Other advantages of Cm-Asp are discussed in US 5962641, e.g. resistance to reducing agents.

In these patents the Cm-Asp ligand is bound to an agarose solid phase which is preferably cross-linked although other polymer matrices such as polystyrene, nylon and SEPHAROSE are suggested. Whilst these matrices may be magnetic, the magnetic particles do not remain in suspension and the solid phases are therefore of limited use in assays.

The immobilised metal ion affinity chromatography technique relies on the chelation between the metal ion, the chelating ligand and normally, an imidazole group present in the protein. It is inevitable however that the complex (i.e. solid phase, chelating ligand and protein) will, on occasions, disassociate and metal ion leakage may occur. It would be preferable therefore if the polymer particle could in fact be covalently bound to the protein to immobilise it. A covalent bond is a much stronger link than the ionic interactions present in a complex and would provide the skilled man with many further options in assaying procedures, e.g. pulldown of protein complexes and screening. A protein covalently bound to a particle would be much more robust allowing more vigorous treatments and purification processes to be carried out.

In US 6441146 (Minh) a method for the covalent immobilisation of a protein is described involving contacting the protein with a non-magnetic resin bound to a pentadentate chelator coordinating copper (II) ions. The resulting complex is contacted with carbodiimide and the copper (II) ions removed to allow formation of the immobilised protein.

The protein suggested for use in this method is a bovine serum albumin and a suitable resin is Sepharose. It has been found however, that copper (II) ions, are not ideal metal ions for this process since these chelate the pentadentate ligand strongly and the strength of this interaction causes much non-specific binding during the covalent immobilisation step, i.e. carbodiimide treatment.

The method in Minh allows binding to occur between the chelating ligand and any naturally occurring lysine residues in the bovine serum albumin (BSA). The BSA in Minh may therefore have many orientations of bound ligand making the technique unsuitable for purification or amplification.

It has now been found that a chelating ligand, e.g. Cm-Asp chelating ligand, can be covalently bound to a polymer particle giving rise to a moiety that possesses the ability to bind covalently to tags on recombinant proteins thereby allowing the skilled biochemist more flexibility in his assaying procedures. Moreover, the chelating ligand should preferably coordinate a metal ion such as cobalt (II) ions to minimise non-specific binding during immobilisation.

Viewed from a first aspect, therefore, the present invention provides a process for covalently binding a tagged

protein, e.g. a HAT-tagged protein, to a polymer particle, e.g. a magnetic polymer particle comprising:

contacting a tagged protein with a chelating agent-polymer particle conjugate wherein said tag comprises at least two histidine residues and at least two lysine residues and said chelating agent is tridentate, tetradentate or pentadentate and comprises at least two carboxyl groups and is coordinated by a metal ion, preferably a $Co^{2+}$ ion, to form a protein-polymer particle-chelating agent metal ion complex:

contacting said complex with a carbodiimide; and optionally
removing the metal ions.

Alternatively viewed the invention provides a process for isolating a tagged protein from a cell lysate comprising contacting a cell lysate comprising at least one tagged protein, e.g. a plurality of tagged proteins, with a chelating agent-polymer particle conjugate wherein said tag comprises at least two histidine residues and at least two lysine residues and said chelating agent is tridentate, tetradentate or pentadentate and comprises at least two carboxyl groups and is coordinated by a metal ion, to form a tagged protein-polymer particle-chelating agent metal ion complex:

contacting said complex with a carbodiimide; and optionally
removing the metal ions.

Viewed from another aspect the invention provides a tagged protein covalently bound to a polymer particle through the tag obtainable by, e.g. obtained by, a process as hereinbefore described.

Viewed from another aspect the invention provides a polymer particle covalently bound to a tagged protein via a linker comprising a residue of formula

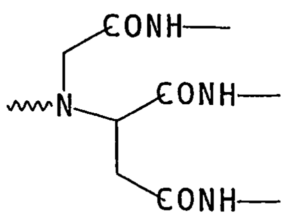

said tag comprising at least two histidine residues and at least two lysine residues.

The proteins of use in the invention are tagged, i.e. they are bound to a label. The tags of use in the invention must comprise at least two histidine residues and at least two lysine residues, e.g. at least three histidine residues and at least three lysine residues.

The most preferred tag of use in the invention is a HAT tag which is well known in the art. The HAT-tag comprises an alpha helix containing 6 histidine residues and 3 lysine residues. The presence of both the imidazole side chain of histidine and the amino group side chain of lysine are critical to the covalent immobilisation process. Without wishing to be limited by theory, it is envisaged that the imidazole of the histidine allows coordination of the tagged protein to the metal ion and hence the chelating agent. On treatment with the carbodiimide, the amino groups on the lysine residues can then covalently bind to the chelating agent through amide linkages.

Thus, any protein tag (i.e. protein label) comprising the necessary histidine and lysine residues available for coordination/binding could be suitable for use in this invention.

Viewed from another aspect therefore the invention provides a polymer particle, e.g. magnetic polymer particle, covalently bound to a tag on a protein, said tag comprising at least two histidine residues and at least two lysine residues, said particle comprising a linking group which binds to said tag via said at two least lysine residues through amide linkages.

The introduction of tags, e.g. HAT tags to proteins can be achieved by conventional processes, e.g. onto the C or N terminus of the protein in question.

The carbodiimide compound activates the carboxyl groups of the chelating agent in a known fashion. It is believed that the carboxyl groups on the chelating agent react with the diimide to form an intermediate comprising a linker of formula -COO-C(NHR)=NR which subsequently reacts with the free amino groups on the lysine residues to form amide linkages from the chelator to the tagged protein. It is preferred if the number of lysine residues in the protein tag matches the number of carboxyl groups in the chelating agent. HAT tagged proteins comprise three such residues and hence the chelating agent will preferably have three carboxyl groups hence allowing the formation of three covalent amide bonds.

Suitable carbodiimides for this reaction include dicyclohexylcarbodiimide (DCC), N-(3-dimethylaminopropyl)-N'-ethylcarbodiimide (EDC), diisopropylcarbodiimide (DIPCDI), t-butylethylcarbodiimide, t-butylmethylcarbodiimide or salts thereof. Dicyclohexylcarbodiimide (DCC) and N-(3-dimethylaminopropyl)-N'-ethylcarbodiimide (EDC) are preferred.

Whilst carbodiimides are ideally suited for this reaction, other carboxyl group activators may also be suitable. Representative examples of activators include phosphonium salts (e.g. BOP, PyBOP, PyBrOP), uronium salts (e.g. HBTU, TBTU, TNTU, TSTU), pyridinium salts-$Bu_3N$, N,N'-carbonyldiimidazole and $Ti(OBu)_4$

The amount of diimide compound employed is not critical although there should be an excess of diimide relative to chelator.

The metal ion can be any metal from groups 1 to 13 of the periodic table, a lanthanide or actinide or a metal Si, Ge, Sn, Pb, As, Sb, Bi, Te, Po or At. It is preferably not a copper ion. The metal ion should preferably be a transition metal ion (i.e. of groups 3 to 12 of the periodic table). Preferred metal ions are those in the 2+ or 3+ oxidation states, especially 2+. Where the metal ion is in the 2+ oxidation state, the entire particle-linker-ligand-metal ion assembly may be uncharged which reduces the possibility of non-specific binding. Preferred metals are Ni, Fe, Ga, Mn, Co and Zn of which Fe, Ga, Mn and Co are preferred, especially $Co^{2+}$.

The metal ion coordinated to the chelating agent may to be removed after the formation of the covalently immobilised protein and this can be achieved using an alternative chelating agent to coordinate the ion. Conveniently this is achieved with a strong chelating agent EDTA although other chelating agents such as DTPA would also be suitable. Whilst it is preferable to remove the metal ions, this is not essential.

The chelating ligand employed in the invention is a tridentate, tetradentate or pentadentate ligand comprising at least two carboxyl groups. Preferably the chelating ligand will be tetradentate or tridentate, especially tetradentate. Suitable ligands include iminodiacetic acid, nitrilo triacetic acid, tris(carboxymethylethylene diamine or Cm-Asp. Of these Cm-Asp is highly preferred.

The Cm-Asp ligand bound to the optionally magnetic polymer particle (MPP) (i.e. the particle-chelating agent conjugate) is depicted below both in its uncoordinated state and coordinated to a metal ion (the wavy line representing a bond or a linker between the Cm-Asp and particle). The nitrogen atom is also believed to be involved in coordination, i.e. Cm-Asp is tetradentate:

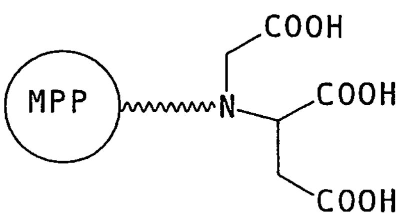

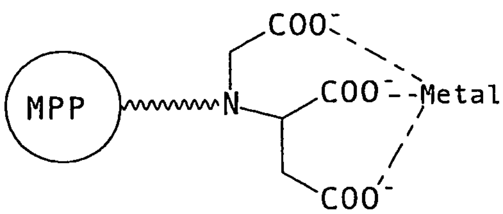

It has been surprisingly found that the reaction described above results in an immobilised tagged protein in a controlled orientation. The tag is preferably located either at the N-terminal end or the C-terminal end of the protein, allowing easy determination of protein orientation.

The polymer particles used in the process of the invention are preferably magnetic and may be any magnetic polymer particle e.g. as described in US-A-4,654,267. The particles are preferably porous to allow the presence of the superparamagnetic crystals in the pores thereof. The surface of the particles is normally functionalised to allow coupling of the chelator ligand to the polymer particle, e.g. it may be functionalised to carry any known surface structure such as carboxyl groups, tosyl groups, amino groups, epoxy groups, maleamido groups, thiol groups etc. Hence, the surface may be amine functionalised before ligand coupling. Alternatively, an amine functionalised surface can itself be further functionalised to carry other functional groups, e.g. COOH groups.

The polymer particle is preferably made from combinations of vinylic polymers (e.g. styrene), acrylates and/or methacrylates. The polymeric material may optionally be crosslinked, for example by incorporation of cross-linking agents, for example as comonomers, e.g. divinylbenzene (DVB) or ethyleneglycol dimethacrylate. Appropriate quantities of the cross-linking agents (e.g. comonomers) required will be well known to the skilled man. Preferably the polymer is a cross-linked styrenic polymer (e.g. a styrene-divinylbenzene polymer, surface functionalized by the use of a nitro-group containing comonomer, e.g. nitro-styrene, and subsequent reduction) or a cross-linked (meth)acrylic polymer surface functionalized by the use of an epoxy-group containing comonomer (e.g. glycidylmethacrylate) and subsequent amination (e.g. by reaction with ethylene diamine).

The superparamagnetic crystals in the polymer particles used in the process of the invention may be of any material capable of being deposited in superparamagnetic crystalline form in the porous polymer particles. Magnetic iron oxides, e.g. magnetite or maghemite are preferred; however the crystals may be of mixed metal oxides or other magnetic material if desired. The total quantity of crystalline magnetic material present is generally more than 1%,

preferably more than 3%, desirably more than or equal to 5% (by weight, e.g. up to 40% wt. The percentage is calculated on a Fe (or equivalent metal in the case of magnetic materials other than iron oxides) weight basis based upon the overall dry weight of the coated particles.

Polymer particles according to the various aspects of the present invention will generally have sizes (i.e. diameters) that are generally in the micrometer range, such as 0.2 to 120 microns, e.g. 0.3 to 100 $\mu$m, especially 0.5 to 50 $\mu$m, more especially 0.8 to 5 $\mu$m, e.g. 0.8 to 1.5 $\mu$m, preferably 1 to 1.2 $\mu$m.

Typically the porous particles used will have a surface area of at least 15 $m^2/g$ (measured by the BET nitrogen absorption method), and more preferably at least 30 $m^2/g$, e.g. up to 700 $m^2/g$, when corrected to a mean particle diameter of 2.7 $\mu$m (i.e. multiply surface area by 2.7/MD, where MD is the mean diameter in micrometers). Similarly scaled, the particle pore volume is preferably at least 0.1 mL/g.

Typically, the polymer particles are spherical and substantially monodisperse before they are coated and especially preferably remain spherical and substantially monodisperse once they have been coated.

By substantially monodisperse it is meant that for a plurality of particles (e.g. at least 100, more preferably at least 1000) the particles have a coefficient of variation (CV) of less than 20%, for example less than 15%, preferably less than 12%, more preferably less than 11%, still more preferably less than 10% and most preferably no more than about 8%, e.g. 2 to 5%. CV is determined in percentage as

$$CV = \frac{100 \times \text{standard deviation}}{\text{mean}}$$

where mean is the mean particle diameter and standard deviation is the standard deviation in particle size. CV is preferably calculated on the main mode, ie. by fitting a monomodal distribution curve to the detected particle size distribution. Thus some particles below or above mode size may be discounted in the calculation which may for example be based on about 90% of total particle number (of detectable particles that is). Such a determination of CV is performable on a Coulter LS 130 particle size analyzer.

Functionalisation of the polymeric material may take place after polymerisation by, for example, nitration and subsequent reduction of the thus-formed nitro groups to pendant amine groups; or direct amination, for example by treatment with amino ethanol. As further alternatives, polymeric particles prepared by the well-known Ugelstad two-step swelling process and the improvements thereto disclosed in WO 00/61647 (Dyno) may be used. Porous polymer particles produced according to the processes described in this publication may have magnetic particles deposited in their pores by standard techniques.

As a further possibility, porous polymer particles may be prepared from nitro styrene and DVB, and magnetic material introduced as taught in US-A-4,654,267.

The superparamagnetic polymer beads sold by Dynal Biotech ASA under the trade names Dynabeads, especially Dynabeads MyOne are especially preferred. Dynabeads are particularly advantageous since they remain in suspension and do not exhibit magnetic particle sedimentation often associated with other magnetic beads. Dynabeads also show excellent magnetic mobility compared to other magnetic particles in which high levels of iron are present. Dynabeads exhibit beneficial kinetics allowing shorter reaction times and higher throughputs. Their unspecified binding is lower than other magnetic beads and their proper use results in a concentration of the desired material taking place resulting in easier and more efficient washing procedures. Finally Dynabeads, e.g. MyOne beads are easy to automate and are monodisperse.

The chelating ligand is bound to the polymer particle to form the conjugate. By bound is meant that the ligand is covalently linked to the polymer particle, optionally using a linking group as discussed in detail below in connection with Cm-Asp ligands. The person skilled in the art will realise that the principles and chemistry described are equally applicable to binding of other ligands to the polymer particles.

The Cm-Asp ligand can be bound to the polymer particle by various procedures although it is preferred if there are at least three linking atoms between the polymer particle surface and the nitrogen atom of the Cm-Asp, e.g. the styrene surface and the nitrogen atom of the Cm-Asp ligand. Preferably there are at least 6 atoms separating the Cm-Asp ligand from the polymer particle surface, more preferably there are between 6 and 20 atoms separating the Cm-Asp ligand from the polymer particle surface.

In US 6242581 aspartic acid is coupled to the solid phase prior to carboxymethylation to form the Cm-Asp ligand however it has not been possible to use this technique to provide a Cm-Asp group on a polymer particle. Rather, the inventors have devised alternative syntheses in which the Cm-Asp ligand is fully formed prior to coupling to the polymer particle.

In this regard, it has been found that when there are fewer than 3 atoms between the polymer surface and Cm-Asp ligand then coupling yields are low. In contrast to an agarose support carrying Cm-Asp (as describe in US-A-5962641), it is necessary in the present invention to ensure that coupling yields between the polymer particle and Cm-Asp are relatively high. The surface area of an agarose support is considerably greater than that of a polymer particle and hence the binding of Cm-Asp to the support does not need to be achieved in high yield. In the present case, yields need to be much higher to ensure that enough polymer particles carry the Cm-Asp ligand.

It is preferred if the at least 3 atom linker comprises an amino group (-NH-). Polymer beads are often made from styrene polymers which are nitrated to form $NO_2$ groups on the surface. After reduction of these groups, e.g. using ammonia, amino groups are formed and these form the most common link from the polymer particle surface.

The next portion of the linker preferably represents the residue of an electrophile, i.e. the group which remains after reaction of the electrophile with a nucleophile. Hence, the linker may comprise an oxo group (C=O, the residue of an ester/carboxyl group), a - $CH(OH)CH_2$- group (the residue of an epoxide), -$CH_2$- (where the electrophile is, for example a $CH_2$Hal). The linker may also incorporate a number of atoms linking the actual electrophile to the -NH- group, e.g. an alkylene chain or ether chain, e.g. as in -$CH_2CH_2CH_2$-, or -$CH_2CH_2CH_2$-O-.

A final portion of the linker represents the residue of a nucleophile from the Cm-Asp, i.e. the residue which results after reaction of this nucleophile with the electrophile. As discussed in more detail below this may be a aminoalkylene or aminoether/polyether, thiol or hydroxyl residue.

Hence the wavy line in formula (I)

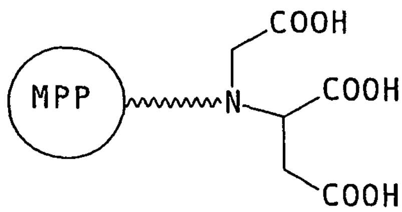

(I)

can represent -NH-$L_1$-Er-Nr-$L_2$- wherein $L_1$ represents a 1 to 10 atom linker to the electrophile residue (Er), and $L_2$ represents a 1 to 10 atom linker to the nucleophile residue (Nr).

It is of course within the scope of the invention for the magnetic polymer particle to carry a nucleophile with the Cm-Asp being functionalised to carry an electrophilic group.

In a preferred embodiment the polymer particle should be functionalised to carry a coating which can react with the Cm-Asp ligand to couple the particle to the Cm-Asp.

In an especially preferred embodiment, a particle coating is provided which carries a carbon-carbon double bond. This can be achieved by, for example, reaction of the particle with an allyl or vinyl compound, e.g. butenoic acid. Hydroxy functionalised particle surfaces can be reacted with allyl bromide to form double bonds on the particle surface. Also, carboxy functionalised particle surfaces can be reacted with allylamines to provide double bonds on the particle surface. The Cm-Asp may then be coupled directly to the double bond using appropriate chemistry or more preferably, the double bond may then be reduced e.g. in the presence of aqueous halide to provide a halide electrophile which can be reacted with the Cm-Asp ligand to ensure successful coupling.

Another preferred preparation process involves functionalising the surface of the polymer particle to carry carboxyl groups. The carboxylic acid groups can be activated by reaction with N-hydroxysuccinimide esters and reacted with a Cm-Asp ligand as discussed above.

The ligand coordinates a metal ion, especially $Co^{2+}$. Coordination can be easily effected by exposing the Cm-Asp to, for example, the metal chloride, e.g. cobalt (II) chloride. The use of cobalt, as opposed to copper minimises the amount of non-specific binding which occurs. When using a metal ion such as copper (II) in the process described herein the possibility exists that the chelating ligand will bind to naturally occurring lys/his residues in the protein as opposed to directly to the tag. Such non-specific binding drastically residues the usefulness of the technique described herein since no longer can any meaningful isolation of protein be achieved. By using cobalt ions, the chelating binding essentially binds exclusively to the tag on the protein providing the skilled biochemist with an ideal conjugate for further study.

The ligand may too be functionalised prior to coupling with the polymer particle. For example, it has proved advantageous to provide the Cm-Asp ligand with a linking group carrying a primary nucleophile to aid reaction with electrophilic groups on the particle surface. The nitrogen atom of the Cm-Asp ligand is secondary and it has been found that this atom is too unreactive, perhaps due to steric hindrance, to react in high yield with electrophilic groups, e.g. halides, on the particle surface.

It is preferred therefore to couple the Cm-Asp to a linker group having at least two atoms and comprising a nucleophile such as an amine, hydroxyl or thiol group. Preferably the linker is an alkylamine, e.g. C5/6-alkylamine linker or an ether/polyether linkage e.g. comprising one or two oxygen atoms and 3 to 6 carbon atoms. Coupling of the linker

to the Cm-Asp (via the nitrogen atom thereof) is achieved using known chemistry as described in the Examples. The Cm-Asp ligand itself can be manufactured using known chemistry. It is also possible to synthesise the entire linker Cm-Asp structure using standard chemistry as shown in the examples. The skilled chemist will be able to devise further methods for synthesising the Cm-Asp linker molecules of use in the invention.

Other chelators can be made using similar chemistry.

In some embodiments of the invention it may be necessary to protect the carboxyl groups of the ligand during syntheses. This can be easily effected using known protection strategies, e.g. using an ester protecting group which can be hydrolysed in acid or base as is known in the art.

The polymer particles carrying the ligand with associated metal ion can in general be used for attaching to and combining with any suitably tagged protein and are hence of use in a wide variety of assays. They are of particular use, however, in the isolation of HAT-tags in recombinant proteins. Hence viewed from another aspect the invention provides the use of a magnetic polymer particle covalently bound to HAT-tagged protein, in an assay. Alterntively, the invention provides an assay comprising a process as hereinbefore defined. Suitable assays and ways to carry these out are known by the skilled biochemist.

For example, the capture of tagged proteins on the functionalised particles of the invention has various applications. The rapid reaction kinetics and gentle handling of isolated proteins make this technology well suited for the "pull down" of large protein complexes. Thus functionalised beads may be used in sample preparation for mass spectrometry analysis. It is believed that complexes isolated with the covalently bound immobilised beads may be more intact than complexes isolated with columns or other solid supports including other magnetic particles with uneven surfaces and are therefore ideal for use in mass spectrometry sample isolation.

The immobilisation technology may also act as a solid phase for use in assay procedures. The beads of the invention are not prone to aggregation and are highly dispersed in solution and show a low degree of non-specific binding. These properties allow for high quality screening results and protocols that are easily automated on a wide range of automation platforms. The beads may also be used in phage display perhaps as a solid phase or to purify expressed phage display selected proteins from a library.

In general therefore the capture of tagged proteins may allow microscale protein purification, clean up of mutated protein libraries, denaturing elution of protein/peptide, mild elution of proteins/peptide, protein-protein interaction studies and screening technologies, e.g. for drug discovery, molecular display, aptamer screening, phage display, engineered enzyme screening and diagnostics.

The invention will now be described further by reference to the following non-limiting examples.

**Reactant Preparation**

The Cm-Asp triester below was prepared as follows:

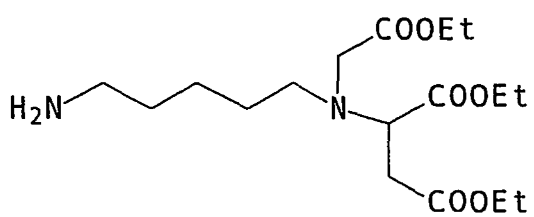

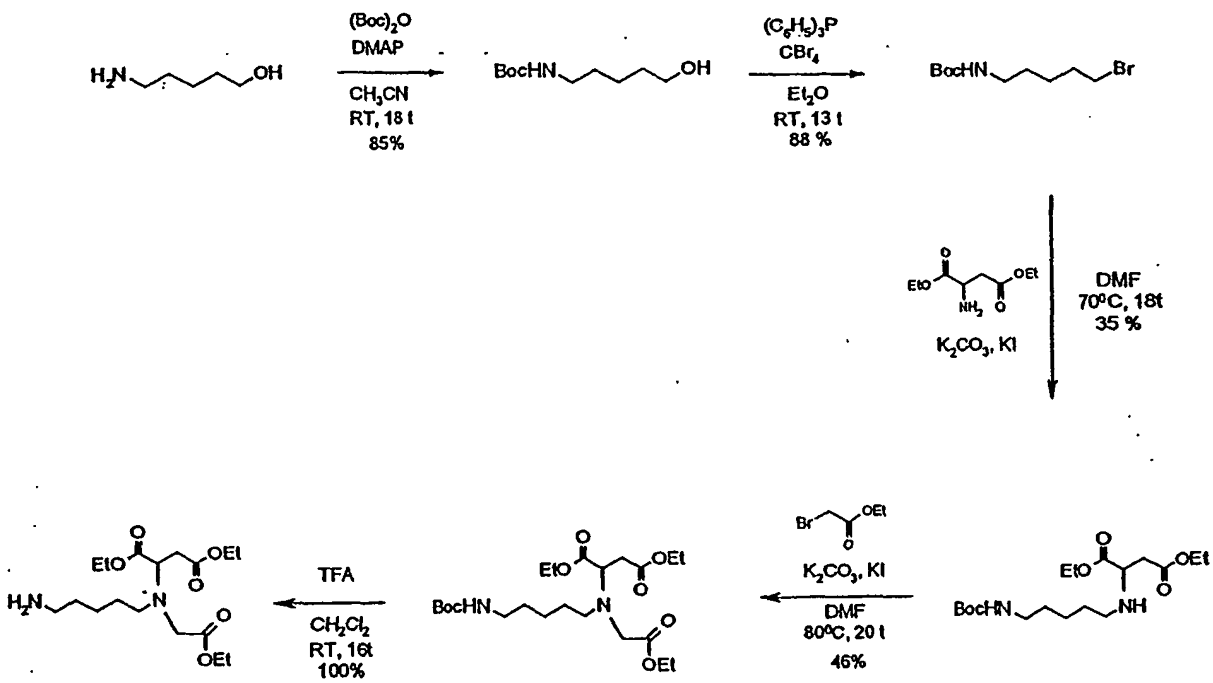


## Example 1:

Bromination

17.3 g of a methanol suspension of the magnetic styrene particles having 0.5 mmol/g allyl groups was washed four times with 45 mL sodium acetate buffer (pH = 5.9). After adjusting the particle content to 9 wt%, 0.96 g of pyridinium tribromide dissolved in 10 mL DMF was added while stirring at 350 rpm. After five minutes at room temperature the particles were washed five times with 45 mL deionised water.

## Example 2:

Functionalization with Cm-Asp chelator

18.0 g of a suspension of the particles prepared as in Example 1 was washed three times with 20 mL of 50mM sodium bicarbonate. The particle content was adjusted to 12 wt%. 0.17 g of the Cm-Asp triester (prepared as described above) was then added to the suspension. 50mM sodium bicarbonate was added until a particle content of 10 wt% was achieved. The reaction mixture was shaken at 600 rpm at 40°C for 15 hours. The particles were then washed four times with 20 mL deionised water.

## Example 3:

Hydrolysis

20.0 g of a suspension of particles prepared as in Example 2 was washed twice with 20 mL of 1M lithium hydroxide. After adjusting the particle content to 10 wt% the mixture was shaken at 250 rpm for four hours at room temperature. The particles were then washed with deionised water until pH 6-7.

## Example 4:

Cobalt-loading

250 mg of particles prepared as in Example 3 were washed twice with 5 ml reverse osmosis-water. 5 ml 2,5

mM $CoCl_2$ was added to the particles and incubated for 5 h. The tube was placed in a magnet, and the supernatant was removed. The particles were washed twice with 5 ml phosphate buffered saline (0,01% Tween 20, pH 7,4). The particles were then washed once in 20% ethanol. The particles were stored in 20% ethanol.

**Example 5**

**Cell lysate preparation**

A bacterial pellet containing HAT-CAT (HAT-tagged chloramphenicol acetyl transferase) from a 10 ml culture was resuspended to 1000 μl with 900 μl Binding/Wash buffer. The cells were lysed in the following manner: 1000 μl cell suspension, 500 μl Popculture™ Reagent (Novagen) and 100 μl DNAse I (200 μg/ml) were mixed using a pipette and incubated at room temperature or on ice for 10 min.

**Bead equilibration**

40 mg of Dynabeads®Talon (i.e. the beads obtained in Example 4) were equilibrated by washing the beads twice in 3 ml Binding/Wash buffer (50 mM NaP pH 8.0, 300 mM NaCl, 0.01% Tween 20).

**Binding polyhistidine-tagged (i.e. HAT-tagged) proteins to Dynabeads®TALON™**

The cell lysate was added to the equilibrated beads and the volume increased to 7.5 ml with Binding/Wash buffer. The beads were rolled at room temperature for 10 min. After the binding step had been completed the supernatant was removed using a pipette and the beads washed three times with 3 ml binding/wash buffer.

20 mg of the beads were resuspended in 1 ml 15 mM MES-buffer at pH 6. 50 μl 10 mg/ml EDC in RO-water (Reverse Osmosis) was added. The tube was rolled for 2 h. The supernatant was removed and the beads washed one time with 1 ml elution-buffer (150 mM Imidazole, 50 mM NaP pH 8.0, 300 mM NaCl, 0.01% Tween 20) and 3 times with PBS, 0,05% Tween 20 and resuspended in 1 mL PBS, 0,05% Tween 20.

20 mg of the beads were washed with 1 ml elution-buffer. The beads were resuspended in 1 ml PBS, 0,05% Tween 20.

**Detection of HAT-CAT on the beads**

Covalently coupled HAT-CAT were detected using time-resolved fluorescence with "Eu"-labelled anti-CAT.

Results:

EDC-treated beads: 2.6 μg anti-CAT pr mg beads.
Elution buffer-treated beads: 0.1 μg anti-CAT pr mg beads.

**Example 6**

Functionalisation of carboxylic acid groups to N-hydroxysuccinimide ester

50 g of a suspension of 5.0 g of the particles of MyOne Carboxylic acid beads was acidified by washing with 0.1 M acetic acid (3 x 50 mL). The acidified particles (which have a carboxylic acid content of 0.5 mmole/g DS) were then washed with acetone (4 x 50 mL) and concentrated on a magnet. Extra acetone was added until a total of 35.6 g suspension is achieved. N-hydroxysuccinimide (2.90 g, 25 mmole) and diisopropylcarbodiimide (3.16 g, 25 mmole) are then added. The reaction mixture was stirred at room temperature for 5 hours. The particles were then washed with acetone (5 x 50 mL).

**Example 7:**

Functionalization with Cm-Asp chelator

44 g of an acetone suspension of the beads of Example 6, were washed three times with 50 mL isopropanol. After adjusting the particle content to 12 wt%, 5.6 g of triethylamine was added. 0.10 g of the Cm-Asp triester (prepared

as described above) dissolved in isopropanol, was then added. This results in a particle content of 10 wt%. The reaction mixture was then shaken at 250 rpm at room temperature for 20 hours. The particles were washed three times with 50 mL of isopropanol.

**Example 8:**

Functionalization with Cm-Asp chelator and ethanolamine

To 10 g of an isopropanol suspension of the particles prepared as in Example 7, 0.32 g of ethanolamine was added. The reaction mixture was then shaken at 250 rpm at room temperature for 18 hours. The particles were then washed three times with 10 mL of isopropanol.

**Example 9**

Functionalization with Cm-Asp chelator

1,2 gram of dry Dynabeads 270 Epoxy were mixed with 8,8 gram of 50 mM sodium bicarbonate. 0,17 grams of the Cm-ASP triester (prepared as described above) was added to the suspension and the reaction mixture was shaken at 600 rpm at 60˚C for 16 hours. The particles were worked up by washing four times with 20 ml deionised water.

**Example 10**

Alternative Synthesis of Cm-Asp triester

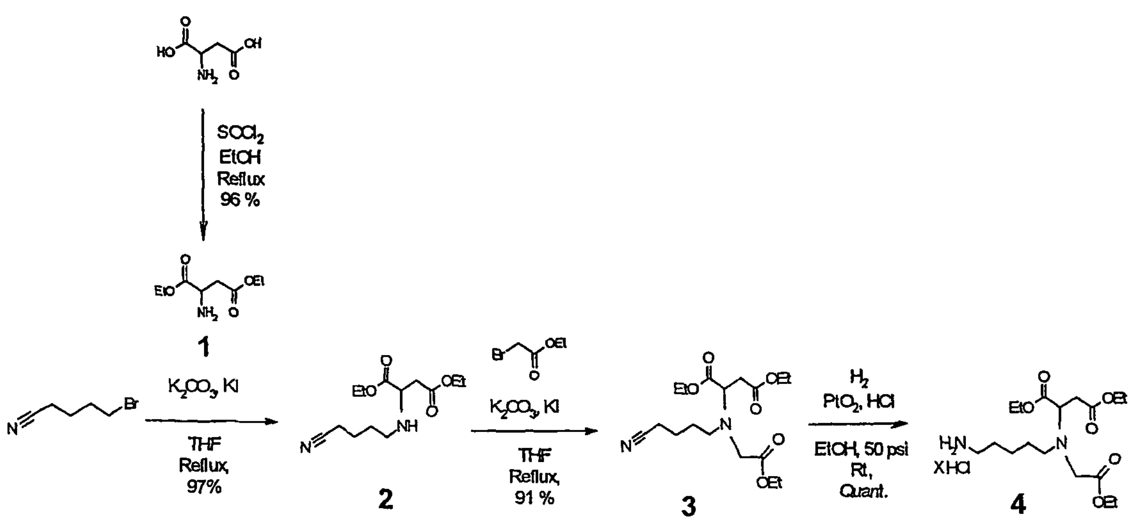

1
2
3
4

**Synthesis of 2-amino-succinic acid diethyl ester**

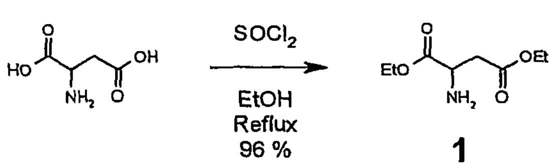

1

To a suspension of DL-aspartic acid (91.5 g, 0.69 mol) in abs. ethanol (800 ml) at 0°C thionylchloride (150 ml, 2.06 mol) was added dropwise. The cooling bath was removed and the mixture refluxed for 3 hours. After cooling to ambient temperature the solvent was evaporated *in vacuo* and to the residue added a saturated aqueous solution of $K_2CO_3$ to pH 8. The aqueous phase was extracted with ethyl acetate (x 3) and the combined organic phases washed with brine and dried ($MgSO_4$), prior to filtration and evaporation *in vacuo* to give 124.8 g (96 %) of compound 1 as an yellow oil. The crude product was used directly in the next step.
$^1H$ NMR (200 MHz, $CDCl_3$): 4.06 (m, 4H), 3.68 (m, 1H), 2.61 (m, 2H), 1.73 (s, 2H), 1.06 (m, 6H).

**Synthesis of 2-(4-cyano-butylamino)-succinic acid diethyl ester**

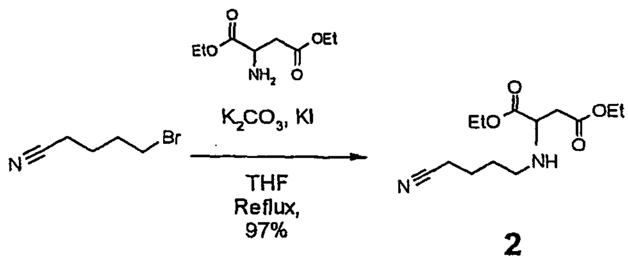


2

To a suspension of **1** (93.0 g, 0.49 mol), $K_2CO_3$ (34.0 g, 0.25 mol), and KI (12.3 g, 0.07 mol) in THF (600 ml) 5-bromovaleronitrile (28.4 ml, 0.25 mol) was added dropwise. The reaction mixture was heated to reflux and stirred for 5 days. After cooling to ambient temperature the mixture was filtered, and the filtrate evaporated *in vacuo.* Purification on silica gel, eluting with hexane/ethyl acetate (7:3) afforded 64.1 g (97 %) of compound 2 as an yellow oil.
$^1H$ NMR (200 MHz, $CDCl_3$): 4.06 (m, 4H), 3.40 (t, 1H), 2.50 (m, 4H), 2.25 (t, 2H), 1.45 (m, 4H), 1.15 (m, 6H).

**Synthesis of 2-[(4-cyano-butyl)-ethoxycarbonylmethylamino]-succinic acid diethyl ester**

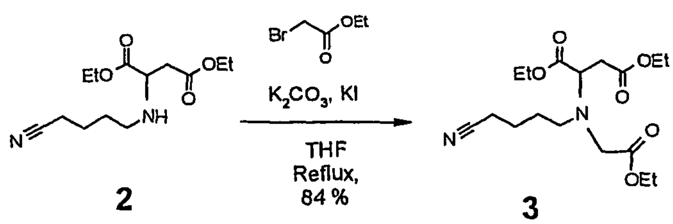


2 3

To a mixture of **2** (86.6 g, 0.32 mol), $K_2CO_3$ (44.3 g, 0.32 mol), and KI (16.0 g, 0.10 mol) in THF (650 ml) ethyl bromoacetate (42.5 ml, 0.38 mol) was added. The reaction mixture was heated to reflux and stirred for 5 days. After cooling to ambient temperature the mixture was filtered, and the filtrate evaporated *in vacuo.* Purification on silica gel, eluting with hexane/ethyl acetate (8:2) afforded 103.7 g (91 %) of compound **3**.
$^1H$ NMR (200 MHz, $CDCl_3$): 4.18 (m, 6H), 3.91 (t, 1H), 3.42 (s, 2H), 2.77 (m, 4H), 2.40 (t, 2H), 1.65 (m, 4H), 1.25 (m, 9H).

**Synthesis of 2-[(5-amino-pentyl)-ethoxycarbonylmethylamino]-succinic acid diethyl ester**

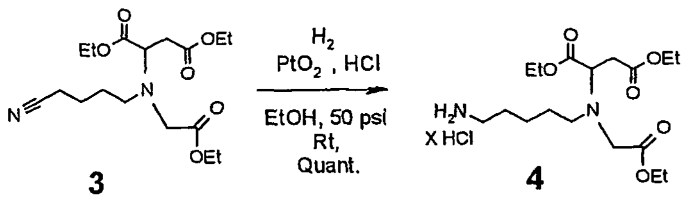

**3** **4**

To a solution of **3** (15 g, 42 mmol) in 95% ethanol (60 ml) and concentrated HCl (10 ml) a suspension of $PtO_2$ (600 mg, 2.6 mmol) in 95% ethanol (20 ml) was added. The reaction mixture was hydrogenated at 50 psi overnight. The mixture was filtrated and the filtrate evaporated *in vacuo* and pumped overnight to afford a quantitative yield of the title compound as the HCl-salt.
$^1H$ NMR (200 MHz, $D_2O$): 4.82 (t, 1H), 4.20 (m, 6H), 3.53 (q, 4H), 3.34 (m, 2H), 3.18 (b d, 2H), 2.92 (b t, 2H), 1.65 (m, 4H), 1.10 (b m, 9H).

**Claims**

**1.** A process for covalently binding a tagged protein to a polymer particle comprising:

contacting a tagged protein with a chelating agent-polymer particle conjugate wherein said tag comprises at least two histidine residues and at least two lysine residues and said chelating agent is tridentate, tetradentate or pentadentate and comprises at least two carboxyl groups and is coordinated by a metal ion, to form a protein-polymer particle-chelating agent metal ion complex:

contacting said complex with a carbodiimide; and optionally
removing the metal ions.

**2.** A process as claimed in claim 1 wherein said tag is a HAT-tag.

**3.** A process as claimed in claim 1 or 2 wherein said carbodiimide is dicyclohexylcarbodiimide or N-(3-dimethylaminopropyl)-N'-ethylcarbodiimide (EDC) or a salt thereof.

**4.** A process as claimed in any one of claims 1 to 3 wherein said chelating ligand comprises three carboxyl groups.

**5.** A process as claimed in any one of claims 1 to 4 wherein said chelating ligand is tetradentate.

**6.** A process as claimed in any one of claims 1 to 5 wherein said chelating ligand is iminodiacetic acid, nitrilo triacetic acid, tris(carboxymethylethylene diamine or Cm-Asp.

**7.** A process as claimed in claim 6 wherein said chelating ligand is Cm-Asp.

**8.** A process as claimed in any one of claims 1 to 7 wherein said polymer particle is magnetic.

**9.** A process as claimed in any one of claims 1 to 8 wherein said polymer particle is porous.

**10.** A process as claimed in any one of claims 1 to 9 wherein said polymer particle has a diameter in the range 0.2 to 1.5 microns.

**11.** A process as claimed in any one of claims 1 to 10 wherein said polymer particle is a Dynabead.

**12.** A process as claimed in any one of claims 1 to 11 wherein said metal ion is a transition metal ion.

**13.** A process as claimed in claim 12 wherein said metal ion is in the 2+ oxidation state.

**14.** A process as claimed in claim 13 wherein said metal ion is $Co^{2+}$.

**15.** A process as claimed in any one of claims 1 to 14 wherein said metal ions are removed.

**16.** A process as claimed in any one of claims 1 to 15 wherein said process is for isolating a tagged protein from a cell lysate.

**17.** A tagged protein covalently bound to a polymer particle through the tag obtainable by a process as claimed in any one of claims 1 to 16.

**18.** A polymer particle covalently bound to a tagged protein via a linker comprising a residue of formula

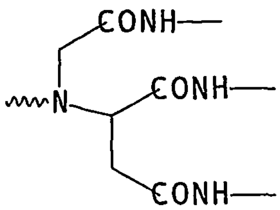

said tag comprising at least two histidine residues and at least two lysine residues.

**19.** A magnetic polymer particle covalently bound to a protein via a tag on said protein, said tag comprising at least two histidine residues and at least two lysine residues, said particle comprising a linking group which binds to said tag via said at two least lysine residues through amide linkages.

**20.** A plurality of magnetic particles as claimed in claim 19 said particles being monodisperse.

**21.** An assay comprising a process as claimed in any one of claims 1 to 16.

**22.** Use of a magnetic polymer particle covalently bound to HAT-tagged protein in an assay.

**Patentansprüche**

**1.** Ein Verfahren für das kovalente Binden eines getaggten Proteins an ein Polymerteilchen, das folgendes umfasst:

Kontaktieren eines getaggten Proteins mit einem Konjugat aus Chelatbildner und Polymerteilchen, wobei dieser Tag mindestens zwei Histidinreste und mindestens zwei Lysinreste umfasst und es sich bei dem Chelatbildner um Tridentat, Tetradentat oder Pentadentat handelt und dieser mindestens zwei Carboxylgruppen umfasst und durch ein Metallion koordiniert wird, um einen Komplex aus Protein, Polymerteilchen, Chelatbildner und Metallion zu bilden;
Kontaktieren dieses Komplex mit einem Carbodiimid; und optional Entfernen der Metallionen.

**2.** Ein Verfahren wie in Anspruch 1 beansprucht, wobei es sich bei dem Tag um einen HAT-Tag handelt.

**3.** Ein Verfahren wie in Anspruch 1 oder 2 beansprucht, wobei es sich bei dem Carbodiimid um Dicyclohexylcarbodiimid oder N-(3-Dimethylaminopropyl)-N'-ethylcarbodiimid (EDC) oder ein Salz davon handelt.

**4.** Ein Verfahren wie in einem der Ansprüche 1 bis 3 beansprucht, wobei der Chelatligand drei Carboxylgruppen umfasst.

**5.** Ein Verfahren wie in einem der Ansprüche 1 bis 4 beansprucht, wobei es sich bei dem Chelatligand um Tetradentat handelt.

**6.** Ein Verfahren wie in einem der Ansprüche 1 bis 5 beansprucht, wobei es sich bei dem Chelatligand um Iminodiessigsäure, Nitrilotriessigsäure, Tris(carboxymethyl)ethylendiamin oder Cm-Asp handelt.

**7.** Ein Verfahren wie in Anspruch 6 beansprucht, wobei es sich bei dem Chelatligand um Cm-Asp handelt

**8.** Ein Verfahren wie in einem der Ansprüche 1 bis 7 beansprucht, wobei das Polymerteilchen magnetisch ist.

**9.** Ein Verfahren wie in einem der Ansprüche 1 bis 8 beansprucht, wobei das Polymerteilchen porig ist.

**10.** Ein Verfahren wie in einem der Ansprüche 1 bis 9 beansprucht, wobei das Polymerteilchen einen Durchmesser im Bereich von 0,2 bis 1,5 Mikron aufweist.

**11.** Ein Verfahren wie in einem der Ansprüche 1 bis 10 beansprucht, wobei das Polymerteilchen ein Dynabead ist.

**12.** Ein Verfahren wie in einem der Ansprüche 1 bis 11 beansprucht, wobei es sich bei dem Metallion um ein Ion eines Übergangsmetalls handelt.

**13.** Ein Verfahren wie in Anspruch 12 beansprucht, wobei sich das Metallion in dem 2+ Oxidationszustand befindet.

**14.** Ein Verfahren wie in Anspruch 13 beansprucht, wobei es sich bei dem Metallion um $CO^{2+}$ handelt.

**15.** Ein Verfahren wie in einem der Ansprüche 1 bis 14 beansprucht, wobei die Metallionen entfernt werden.

**16.** Ein Verfahren wie in einem der Ansprüche 1 bis 15 beansprucht, wobei das Verfahren dazu dient, ein getaggtes Protein aus einem Zelllysat zu isolieren.

**17.** Ein getaggtes Protein, das durch den Tag, der durch ein Verfahren wie in einem der Ansprüche 1 bis 16 beansprucht erhältlich ist, kovalent an ein Polymerteilchen gebunden ist.

**18.** Ein Polymerteilchen, das kovalent über einen Linker an ein getaggtes Protein gebunden ist und einen Rest der folgenden Formel umfasst

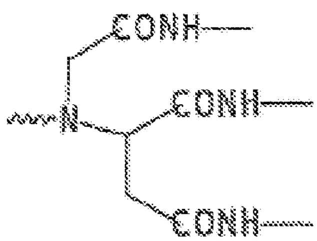

wobei der Tag mindestens zwei Histidinreste und mindestens zwei Lysinreste umfasst.

**19.** Ein magnetisches Polymerteilchen, das kovalent an ein Protein gebunden ist, und zwar über einen Tag auf dem Protein, wobei der Tag mindestens zwei Histidinreste und mindestens zwei Lysinreste umfasst und wobei das Teilchen eine Verbindungsgruppe umfasst, die durch Amidbindungen über die mindestens zwei Lysinreste an den Tag bindet.

**20.** Eine Vielzahl an magnetischen Teilchen, wie in Anspruch 19 beansprucht, wobei diese Teilchen monodispers sind.

**21.** Ein Assay, der ein Verfahren wie in einem der Ansprüche 1 bis 16 beansprucht umfasst.

**22.** Verwendung eines magnetischen, kovalent an HAT-getaggtes Protein gebundenen Polymerteilchens in einem Assay.

**Revendications**

**1.** Procédé pour lier de façon covalente une protéine marquée à une particule polymère, comprenant :

- la mise en contact d'une protéine marquée avec un conjugué agent chélatant - particule polymère, ledit

marqueur comprenant au moins deux résidus histidine et au moins deux résidus lysine et ledit agent chélatant étant tridentate, tétradentate ou pentadentate et comprenant au moins deux groupes carboxyle et étant coordonné par un ion métallique, pour former un complexe protéine-particule polymère-agent chélatant ion métallique ;
- la mise en contact dudit complexe avec un carbodiimide ; et de façon facultative
- éliminer les ions métalliques.

**2.** Procédé selon la revendication 1, dans lequel ledit marqueur est un marqueur HAT.

**3.** Procédé selon la revendication 1 ou la revendication 2, dans lequel ledit carbodiimide est le dicyclohexylcarbodiimide ou le N-(3-diméthylaminopropyl)-N'-éthylcarbodiimide (EDC) ou un sel de ceux-ci.

**4.** Procédé selon l'une quelconque des revendications 1 à 3, dans lequel ledit ligand chélatant comprend trois groupes carboxyle.

**5.** Procédé selon l'une quelconque des revendications 1 à 4, dans lequel ledit ligand chélatant est tétradentate.

**6.** Procédé selon l'une quelconque des revendications 1 à 5, dans lequel ledit ligand chélatant est l'acide iminodiacétique, l'acide nitrilo triacétique, la tris-carboxyméthyléthylène diamine ou le Cm-Asp.

**7.** Procédé selon la revendication 6, dans lequel ledit ligand chélatant est le Cm-Asp.

**8.** Procédé selon l'une quelconque des revendications 1 à 7, dans lequel ladite particule polymère est magnétique.

**9.** Procédé selon l'une quelconque des revendications 1 à 8, dans lequel ladite particule polymère est poreuse.

**10.** Procédé selon l'une quelconque des revendications 1 à 9, dans lequel ladite particule polymère a un diamètre dans la plage de 0,2 à 1,5 micron.

**11.** Procédé selon l'une quelconque des revendications 1 à 10, dans lequel ladite particule polymère est une bille « Dynabead ».

**12.** Procédé selon l'une quelconque des revendications 1 à 11, dans lequel ledit ion métallique est un ion de métal de transition.

**13.** Procédé selon la revendication 12, dans lequel ledit ion métallique est dans l'état d'oxydation 2+.

**14.** Procédé selon la revendication 13, dans lequel ledit ion métallique est $Co^{2+}$.

**15.** Procédé selon l'une quelconque des revendications 1 à 14, dans lequel lesdits ions métalliques sont éliminés.

**16.** Procédé selon l'une quelconque des revendications 1 à 15, dans lequel ledit procédé est destiné à isoler une protéine marquée à partir d'un lysat cellulaire.

**17.** Protéine marquée liée de façon covalente à une particule polymère par l'intermédiaire du marqueur pouvant être obtenu par un procédé tel que défini à l'une quelconque des revendications 1 à 16.

**18.** Particule polymère liée de façon covalente à une protéine marquée par l'intermédiaire d'un liant comprenant un résidu de formule

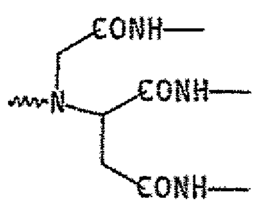

ledit marqueur comprenant au moins deux résidus histidine et au moins deux résidus lysine.

**19.** Particule polymère magnétique liée de façon covalente à une protéine par l'intermédiaire d'un marqueur sur ladite protéine, ledit marqueur comprenant au moins deux résidus histidine et au moins deux résidus lysine, ladite particule comprenant un groupe de liaison qui se lie audit marqueur par l'intermédiaire desdits au moins deux résidus lysine par des liaisons amide.

**20.** Pluralité de particules magnétiques selon la revendication 19, lesdites particules étant monodisperses.

**21.** Essai comprenant un procédé tel que défini à l'une quelconque des revendications 1 à 16.

**22.** Utilisation d'une particule polymère magnétique liée de façon covalente à une protéine marquée par HAT dans un dosage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4654267 A, Ugelstad
- US 6242581 B
- US 5962641 A
- US 6441146 B, Minh
- WO 0061647 A, Dyno